# EUROPEAN PATENT APPLICATION

(11) **EP 2 634 390 A1**
(43) Date of publication of application: **04.09.2013**
(21) Application number: 13157389.1
(22) Date of filing: 01.03.2013
(51) Int. Cl.: F02B 29/04, F02M 31/13

(54) **Heater/cooler module, integrated into an intake manifold of an internal combustion engine for conditioning a gaseous intake fluid**

(30) Priority: 02.03.2012 IT TO20120187
(71) Applicant: DENSO THERMAL SYSTEMS S.p.A., 10046 Poirino (Torino) (IT)
(72) Inventor: Maione, Gabriele, I-10046 POIRINO (Torino) (IT); Massano, Cristiano, I-10046 POIRINO (Torino) (IT); Yasuda, Takashi, I-10046 POIRINO (Torino) (IT)
(74) Representative: Vanzini, Christian

(57) **Abstract**

An intake system for a turbocharged internal combustion engine, comprising
an intake manifold (13) defining a plenum chamber (15) connectable to a plurality of engine cylinders (11),
an intake duct (17) opening into the plenum chamber (15) and supplying a gaseous fluid thereto,
an electric heater (20) provided for heating the gaseous fluid, and a cooler (30) supplied with a cooling fluid, provided for cooling the gaseous fluid.

The heater and the cooler cooperate to form a conditioning module (40) positioned within the plenum chamber (15) in such a way as to intercept at least a substantial part of the gaseous fluid entering the plenum chamber (15) from the intake duct (17), wherein the cooler (30) is arranged in series with the heater (20).

## Description

The present invention refers in general to systems for conditioning gaseous fluids (air or recirculated exhaust gas/air mixtures) in the intake to internal combustion engines.

It is known that in the design of systems for supplying air or air-gas mixtures to internal combustion engines, problems of varying order are encountered, which require the conditioning of the intake fluids to the engine.

One of these problems regards cold starting of the engine. In the event of starting in the presence of low environmental temperatures, it is known that low temperatures of the intake air and of the engine result in a high energy requirement to bring the internal combustion engine to the temperature levels required for it to function efficiently and economically from the point of view of consumption and of emissions containment. To obviate these problems, systems have been proposed which provide for electric heaters connected to the engine's intake filter or intake manifold.

For example, EP 0 969 199 describes an intake system for an internal combustion engine, comprising an intake manifold, an intake duct opening into the plenum chamber of the manifold, and an electric heater positioned inside the plenum chamber.

Another problem is characteristic of turbocharged engines which require a compressor arranged on the engine's intake line to compress the air or the recirculated gas/air mixture destined for the combustion chambers of the cylinders. In such engines it is in fact necessary to cool the air or the intake mixture to the engine in order to maintain the density acquired by the air/mixture at the outlet of the compressor.

For example, FR 2 934 330 describes a conditioning module for the air supply for an internal combustion engine, comprising a cooler for the turbocharging air and a by-pass for the cooler, arranged in proximity to an intake manifold of the engine. The by-pass is provided for those cases in which it is required, for example for anti-pollution legislation, that the intake air/mixture should be hotter. This is required in particular when it is necessary to regenerate an anti-particulate filter or when it is necessary to start the engine from cold.

Systems have also been proposed which combine the functions of cooling and heating.

The present invention concerns in particular an intake system for a turbocharged internal combustion engine, comprising
an intake manifold defining a plenum chamber connectable to a plurality of engine cylinders,
an intake duct opening into the plenum chamber and suitable for supplying a gaseous fluid thereto,
an electric heater provided for heating the gaseous fluid, and
a cooler supplied with a cooling fluid, provided for cooling the gaseous fluid.

A combined system is proposed by DE 10 2009 036 744, which describes an intake line provided with a heater and a cooler. In this system the heater is connected to an air filter, while the cooler, arranged on the intake line downstream of the heater and upstream of the engine, is provided with a by-pass for those cases where it is necessary to prevent the hot air coming from the heater being cooled by the cooler.

The system described by DE 10 2009 036 744 does not ensure a rapid increase in the temperature of the gaseous intake fluid during the engine's warm-up phase, which represents the most critical phase as regards the production of carbon monoxide and unburnt hydrocarbons. This is due to the fact that the heated air from the heater comes into contact with cold surfaces of the intake line through which it has to pass (e.g. the connections from the air filter to the engine and the connections from the compressor to the by-pass device), wasting part of its content of thermal energy.

An object of the present invention is to propose a system capable of achieving rapid and efficient heating of the gaseous intake fluid during the warm-up phase.

This object is achieved according to the invention by an intake system of the type defined above, wherein said heater and said cooler cooperate to form a conditioning module positioned within the plenum chamber in such a way as to intercept at least a substantial part of the gaseous fluid entering the plenum chamber from the intake duct, wherein the cooler is arranged in series with the heater.

By virtue of the integration of the heater (in particular, a PTC heater) into the intake manifold, it is possible almost totally to exploit the heat provided by the heater to the gaseous intake fluid. Furthermore, by virtue of the integration of the cooler into the intake manifold, it is possible to exploit the thermal energy gained by the gaseous fluid following compression in the compressor, making use of a modulation of the flow of cooling fluid supplied to the cooler.

A conditioning module is therefore proposed, integrated into the intake manifold, which permits maximization in the reduction in carbon monoxide and unburnt hydrocarbons thanks to its positioning within the intake manifold, and therefore away from the combustion chambers. Furthermore, this conditioning module does not require the presence of by-pass devices, with consequent simplification in the structure of the components. When it is not required for the gaseous fluid to be cooled, it is sufficient to arrange for the cooler not to be supplied with the cooling fluid.

According to a preferred embodiment of the invention the heater, in particular a PTC heater, is arranged downstream of the cooler. This makes it possible to exploit to the maximum the thermal energy supplied to the gaseous intake fluid, because the heated air from the heater can flow directly to the inlet valves without having to pass any cold components of the cooler.

A method for controlling warm-up of a turbocharged internal combustion engine also forms a subject of the invention, said engine being provided with an intake system comprising
an intake manifold defining a plenum chamber connected to a plurality of engine cylinders,
an intake duct opening into the plenum chamber and suitable for supplying a gaseous fluid thereto,
an electric heater positioned within the plenum chamber in such a way as to intercept at least a substantial part of the gaseous fluid entering the plenum chamber from the intake duct, and
a cooler supplied with a cooling fluid, positioned within the plenum chamber and arranged in series with the electric heater;
said method being characterized by comprising the following steps:
at the beginning of the engine warm-up, activating the heater to heat the gaseous fluid while the cooler is in condition of non-supply of cooling fluid;
after that, starting cooling fluid supply to the cooler, and modulating the electric power supply to the heater and/or the cooling fluid supply to the cooler; and
at the end of the engine warm-up, de-activating the heater and putting the cooler into normal operation.

Preferential embodiments of the invention are defined in the dependent claims, which are to be understood as an integral and integrating part of the present description.

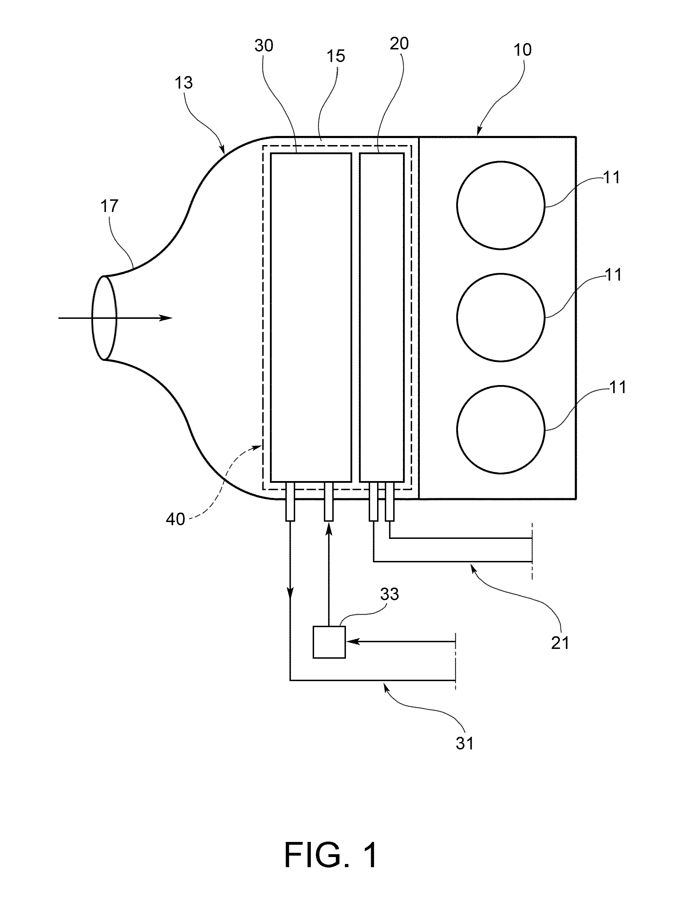

Further characteristics and advantages of the intake system according to the invention will become clearer with the following detailed description of an embodiment of the invention, made with reference to the attached drawing, provided purely by way of non-limiting illustration, which schematically represents an embodiment of the invention.

This illustration shows a conventional internal combustion engine 10, comprising a plurality of cylinders 11, an intake manifold 13 defining a plenum chamber 15 connectable to the cylinders 11 of the engine, and an intake duct 17 opening into the plenum chamber 15 and suitable for supplying a gaseous fluid thereto. This gaseous fluid can be air or an air/recirculated exhaust gas mixture, in the case of engines which exploit the recirculation of the engine's exhaust gases.

The engine 10 may be a turbocharged engine with ignition by compression (for example a diesel engine) or a turbocharged engine with controlled ignition (for example a petrol engine).

Also provided are a heater 20 for heating the gaseous intake fluid, in particular during engine warm-up, and a cooler 30 for cooling the gaseous fluid coming from a compressor (not illustrated) for keeping the density of this fluid at a desired level.

The heater 20 is an electric heater, and is connected to a control unit (not illustrated) through an electrical circuit 21. In particular, the electric heater 20 has a heating resistance having a positive temperature coefficient (PTC) characteristic.

The cooler 30 is supplied with a cooling fluid, in particular water (mixture of water and ethylene glycol or other refrigerant substance), and is connected to a circuit 31 for supplying the cooling fluid, comprising a control device 33 for modulating the flow of intake cooling fluid to the cooler.

The heater 20 and the cooler 30 cooperate to form a conditioning module 40 positioned within the plenum chamber 15 in such a way as to intercept at least a substantial part (in particular, the totality) of the gaseous fluid entering the plenum chamber 15 from the intake duct 17, wherein the cooler is arranged in series with the heater. Preferably, the heater 20 is arranged downstream of the cooler 30. This configuration has the advantage of avoiding the gaseous intake fluid heated by the heater being able to be undesiredly cooled by cold components of the cooler. According to an embodiment not illustrated, the heater could however be located upstream of the cooler.

The warm-up phase of the engine 10 can therefore be controlled with a control system (not illustrated) which manages the module 15, and therefore the electrical supply to the heater 20 and the supply of cooling fluid to the cooler 30.

At the beginning of the engine warm-up, the heater 20 is activated to heat the gaseous intake fluid, while the cooler 30 is in condition of non-supply of cooling fluid. The cooler is therefore inactive, not receiving cooling fluid.

Later, the energy requirement for the gaseous intake fluid diminishes. The supply of cooling fluid to the cooler 30 therefore starts, and the supply of electric power to the heater 20 and/or the supply of cooling fluid to the cooler 30 are modulated to control the thermal transient of the intake fluid.

At the end of the engine warm-up, the heater 20 is deactivated and the cooler 30 is put into normal operation, i.e. operation at the rate specified for cooling the fluid coming from the compressor.

## Claims

1. Intake system for a turbocharged internal combustion engine, comprising
an intake manifold (13) defining a plenum chamber (15) connectable to a plurality of engine cylinders (11),
an intake duct (17) opening into the plenum chamber (15) and supplying a gaseous fluid thereto,
an electric heater (20) provided for heating the gaseous fluid, and
a cooler (30) supplied with a cooling fluid and provided for cooling the gaseous fluid;
**characterized in that**
said heater and cooler cooperate for forming a conditioning module (40) positioned within the plenum chamber (15) in such a way as to intercept at least a substantial part of the gaseous fluid entering the plenum chamber (15) from the intake duct (17), wherein the cooler (30) is arranged in series with the heater (20).

2. System according to Claim 1, wherein said heater is arranged downstream of the cooler.

3. System according to Claim 1 or 2, wherein said electric heater is provided with a heating resistance having a positive temperature coefficient characteristic.

4. Method for controlling warm-up of a turbocharged internal combustion engine (10), said engine being provided with an intake system comprising
an intake manifold (13) defining a plenum chamber (15) connected to a plurality of engine cylinders (11),
an intake duct (17) opening into the plenum chamber (15) and supplying a gaseous fluid thereto,
an electric heater (20) positioned within the plenum chamber (15) in such a way as to intercept at least a substantial part of the gaseous fluid entering the plenum chamber (15) from the intake duct (17), and
a cooler (30) supplied with a cooling fluid, positioned within the plenum chamber (15) and arranged in series with the heater (20);
said method being **characterized by** comprising the following steps:
at the beginning of warm-up of engine, activating the heater (20) to heat the gaseous fluid while the cooler (30) is in condition of non-supply of cooling fluid;
after that, starting cooling fluid supply to cooler (30), and modulating electric power supply to heater and/or cooling fluid supply to cooler (30); and
at the end of warm-up of engine, de-activating the heater (30) and putting the cooler (20) into normal operation.

5. Method according to Claim 4, wherein said heater is arranged downstream of the cooler.

6. Method according to Claim 4 or 5, wherein the electric heater (20) is provided with a heating resistance having a positive temperature coefficient characteristic.
